# EUROPEAN PATENT SPECIFICATION

(11) **EP 3 371 431 B1**
(45) Date of publication and mention of the grant of the patent: **20.03.2024**
(21) Application number: 16812853.6
(22) Date of filing: 03.11.2016
(51) Int. Cl.: F01P 11/10, B60K 11/04, F01P 3/18, B60K 17/28, F01P 5/04, F01P 5/06, F01P 7/04

(54) **TRACTOR WITH COOLING SYSTEM**
TRAKTOR MIT KÜHLSYSTEM
TRACTEUR MUNI D'UN SYSTÈME DE REFROIDISSEMENT

(30) Priority: 06.11.2015 IT UB20155027
(43) Date of publication of application: 12.09.2018
(73) Proprietor: SAME DEUTZ-FAHR ITALIA S.p.A., 24047 TREVIGLIO (BG) (IT)
(72) Inventor: CRIPPA, Luca, 24047 Treviglio (Bergamo) (IT)
(74) Representative: Gamba, Alessandro
(86) International application number: PCT/IB2016/056611
(87) International publication number: WO 2017/077473

(56) References cited:
- EP-A1- 1 253 392
- WO-A1-2010/074638
- DE-U1- 29 504 867
- US-A1- 2012 211 292
- US-A1- 2013 319 778
- US-B1- 6 321 830

## Description

This invention relates to a tractor provided with a cooling system. Specifically, this invention relates to a tractor equipped with a cooling system comprising two independent cooling groups.

In the following description, the term "tractor" means both agricultural tractors and, more generally, earthmoving machinery derived from agricultural tractors or, again, agricultural machines, for example harvesters.

The typical purpose of cooling systems is to cool one or more components or parts of the tractor, for example to cool the motor or other mechanical components, but also the internal environment of the cabin of the driving area. Preferably, the cooling system is equipped with a cooling groups, typically radiator groups, in which a predefined quantity of cooling liquid is cooled by convection to then be moved in the system by pump groups.

So, the greater the demand for cooling liquid, the greater must be the size of the cooling groups.

Instead, in current solutions, while the demand for cooling capacity is increasingly greater, the space for housing the cooling groups is increasingly smaller.

For this reason, some solutions of the known art provide for tractors equipped with cooling systems in which there are a plurality of cooling groups arranged in packs in series transversely to each other in the direction of motion of the tractor. An example of such solutions is described in document EP1450019 in the name of the same applicant. Examples of known solutions of a tractor are disclosed in documents US2013319778A1, DE29504867U1 and US2012211292A1.

Sometimes, these solutions have proved to be not particularly efficient, as only some cooling units operate effectively; specifically, the first cooling groups crossed by the air operate more effectively than the second groups which are crossed by warmer air.

The purpose of this invention is to provide a tractor equipped with a cooling system in which this problem is overcome by ensuring high cooling in minimum dimensions.

This purpose is achieved by a tractor realised according to claim 1. The dependent claims describe further preferred embodiments.

The characteristics and advantages of the tractor according to this invention will be apparent from the following description, given by way of non-limiting example, in accordance with the accompanying figures, in which:

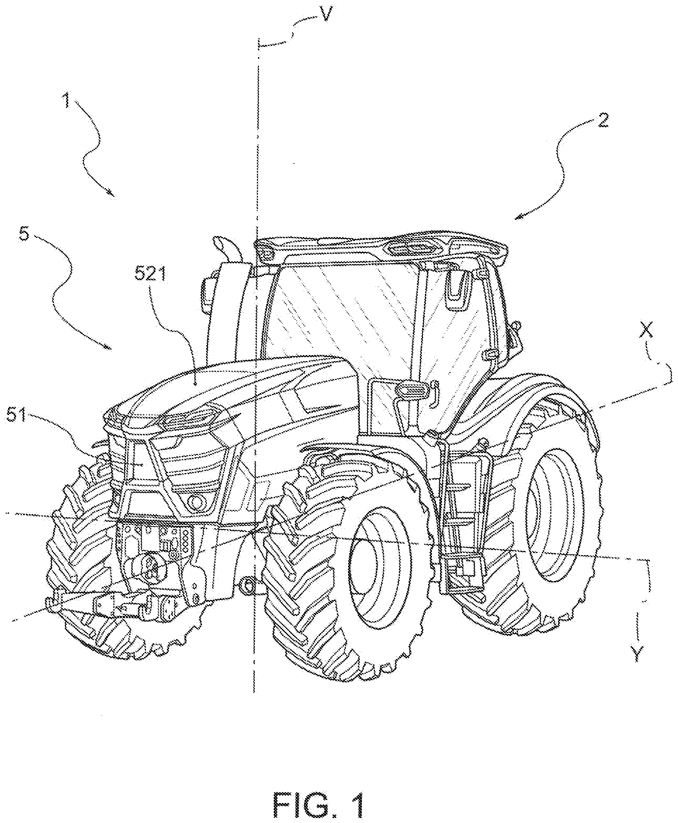

- Figure 1 is a perspective view of a tractor covered by this invention according to a preferred embodiment;

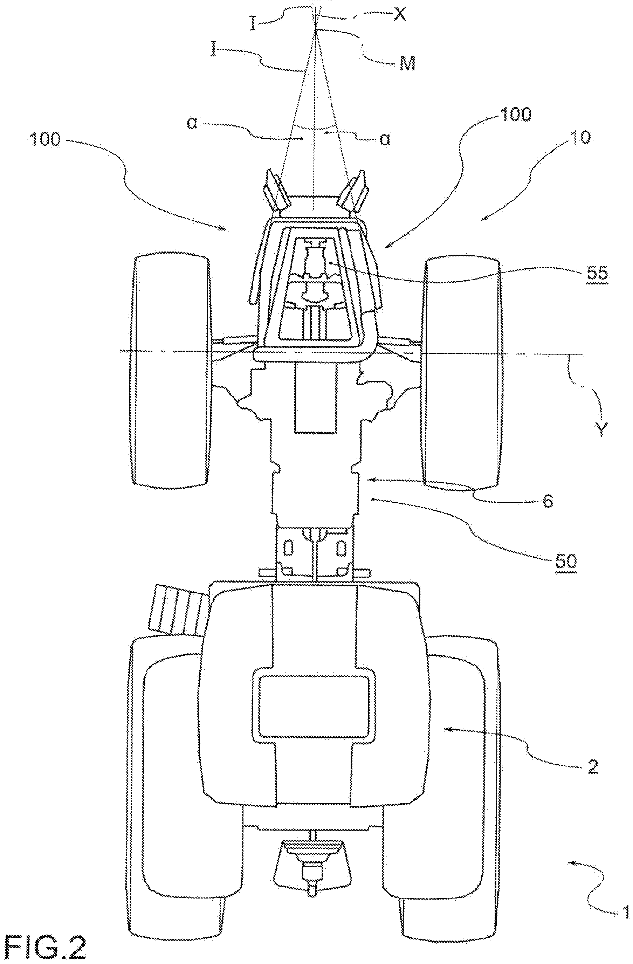

- Figure 2 shows a schematised top view of the tractor of Figure 1;

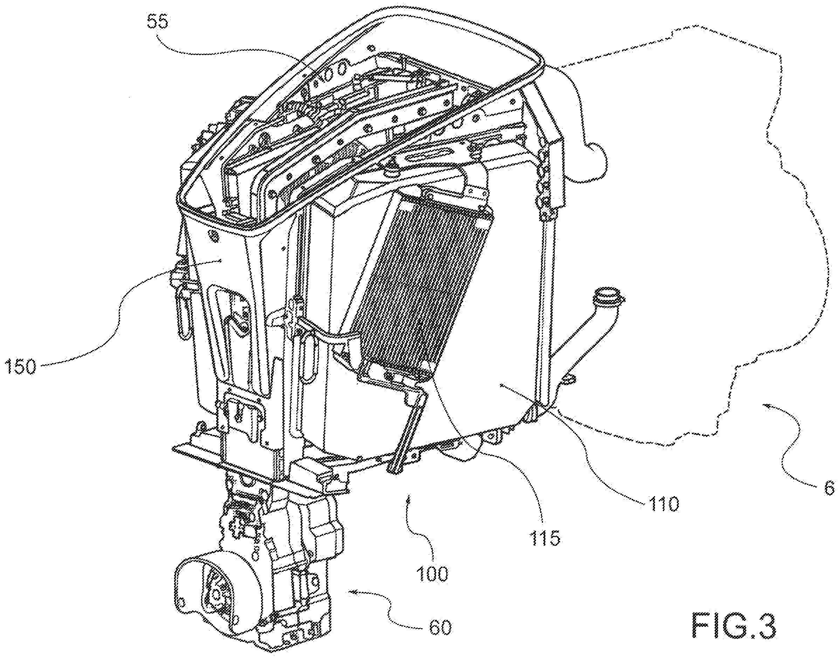

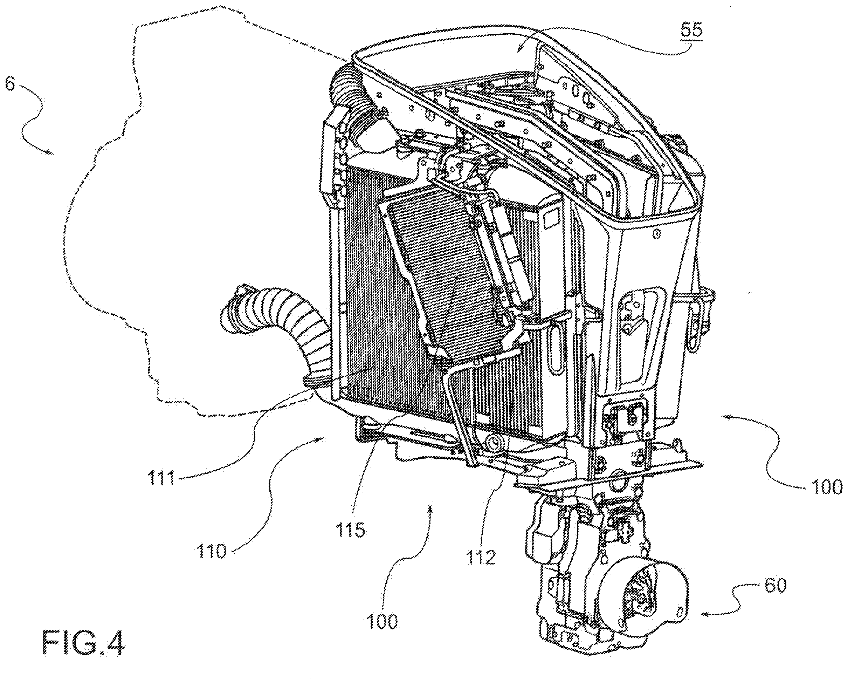

- Figures 3 and 4 are two perspective views of the silhouette of the motor group, the front power take-off and the cooling system of the tractor, the latter in an operative configuration;

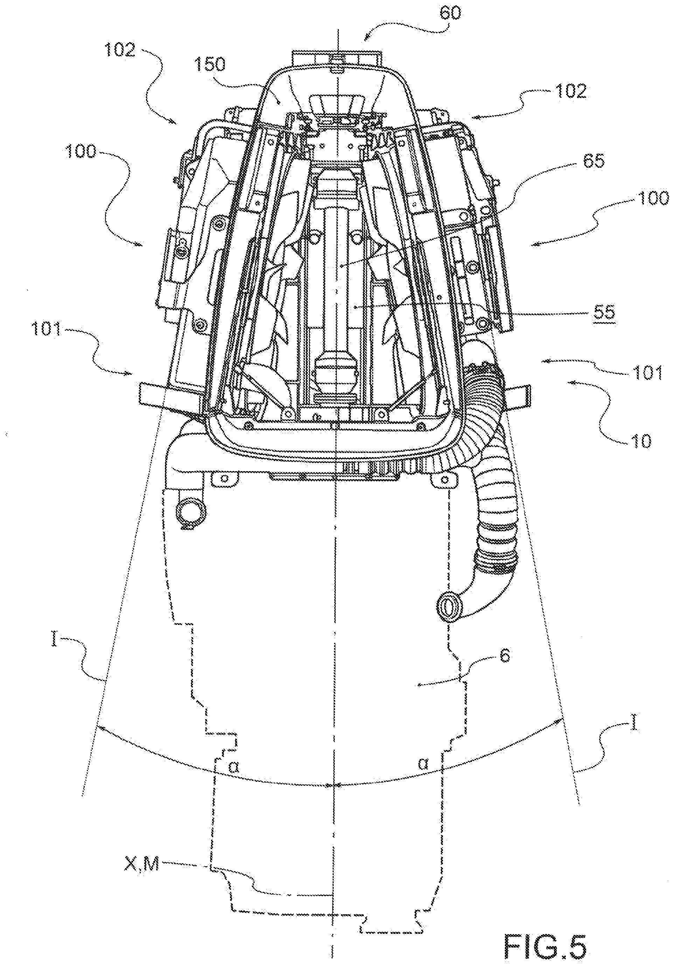

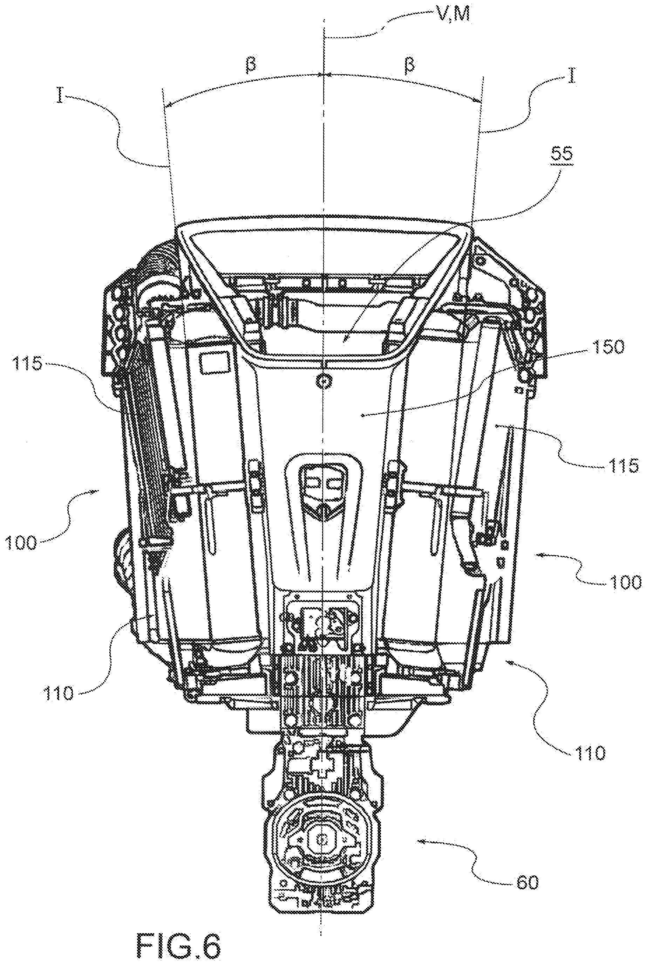

- Figures 7 and 8 show respectively a top view and a front view of the cooling system and power take-off of Figures 5 and 6;

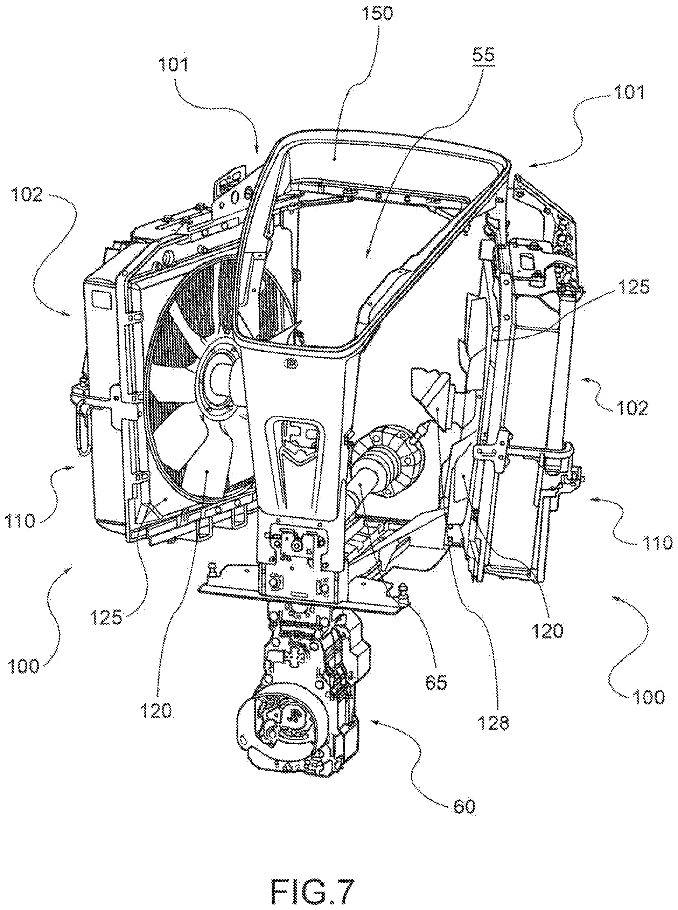

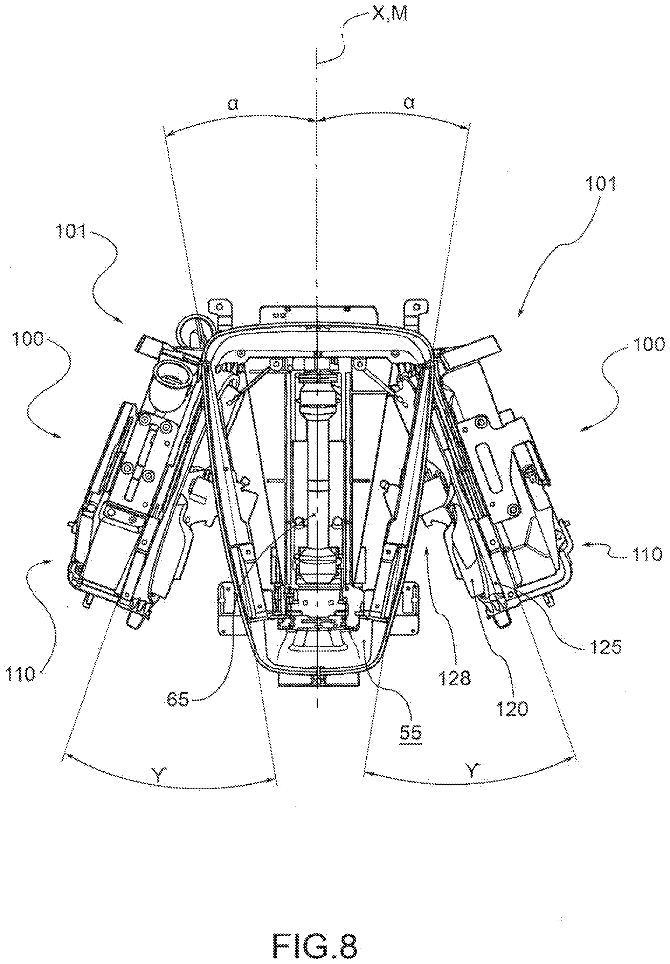

- Figures 7 and 8 are respectively perspective and top views of the cooling system, in a maintenance configuration, and the power take-off according to a preferred embodiment.

In accordance with the accompanying figures, reference number 1 indicates a tractor in its entirety. The figures show a tractor 1 of the agricultural tractor type in a manner not limiting to the embodiment.

The tractor 1 has a longitudinal axis X-X, along the direction of advancement of the tractor in a straight line, a transverse axis Y-Y, perpendicular to the longitudinal axis X-X and parallel to the axles on which the wheels are mounted, and a vertical axis V-V, perpendicular to the longitudinal axis X-X and the transverse axis Y-Y. Preferably, the longitudinal axis X-X lies on a centreline plane M of the tractor 1, on which said vertical axis V-V also lies.

In addition, the tractor 1 comprises a driving area 2 for the user, inhabitable by him, preferably composed of a seat or a closed cabin.

According to a preferred embodiment, the tractor 1 comprises a bonnet 5 suitable to contain a plurality of components and systems of the tractor. Specifically, the tractor 1 comprises an operating region 50, preferably housed inside the bonnet 5.

Preferably, the operating region 50, (similarly the bonnet 5) extends in length along said longitudinal axis X-X frontally to the driving area 2, and in height parallel to the vertical axis V-V.

In particular, in the operating region 50, the tractor 1 comprises a motor group 6 and a cooling system 10 (in particular the operational part of the cooling system 10, while any pipes, ducts or cooling channels, also extend in other parts or regions of the tractor 1, for example to its cabin, or to its rear).

According to a preferred embodiment, the motor group 6 is placed proximally to the driving area 2, while the cooling system 10 is placed distally from the driving area 2. Specifically, in this description, the adjective "proximal" indicates those parts, portions, regions or components of the tractor 1 that, along the longitudinal axis X-X, are positioned facing the driving area 2; while the adjective "distal" indicates those parts, portions, regions or components of the tractor 1 that, instead, are positioned facing away from the driving area 2.

According to a preferred embodiment, the cooling system 10 comprises two cooling groups 100.

Preferably, the two cooling groups 100 are independent of each other, for example, each suitable to cool a respective component or a respective part of the tractor 1. As fully described below, the respective cooling groups 100 also comprise specific components suitable to cool specific components or a specific part of the tractor 1 independently of what is performed by other components.

According to a preferred embodiment, the two cooling groups 100 are spaced transversely from each other; in other words, between the two cooling groups 100, there is an intermediate region 55, for example, occupiable by additional components, or within which air is free to flow.

Preferably, the cooling group 100 comprises a main radiator body 110 that, by means of convection, is suitable to cool, crossed by air, a predefined quantity of cooling liquid that is then circulated to cool specific components, or portions of components, or regions of the respective tractor.

Preferably, the main radiator body 110 has a cooling surface 110', crossable by air, tangent to an imaginary plane I. In other words, in the embodiment with planar main radiator body 110, the cooling surface 110' lies on said imaginary plane I.

According to a preferred embodiment, said imaginary plane I is inclined longitudinally of a predefined angle of longitudinal inclination α with respect to the centreline plane M.

Preferably, the angle of longitudinal inclination α is between 5° and 30°, preferably 10°.

In other words, preferably, the cooling system 10 has shape and dimensions such that the bonnet 5 of the tractor 1 is longitudinally tapered distally.

According to a preferred embodiment, the imaginary plane I is also inclined vertically to the centreline plane M by a predefined angle of vertical inclination β.

Preferably, said angle of vertical inclination β is between 5° and 30°, preferably 5°.

In other words, preferably, the cooling system 10 has shape and dimensions such that the bonnet 5 of the tractor 1 is vertically tapered distally downwards.

According to a preferred embodiment, each cooling group 100 comprises, in addition to the main radiator body 110, a fan 120 having a rotation axis R-R incident to the cooling surface 110'. Preferably, the fan 120 has a rotation axis R-R perpendicular to the cooling surface 110'.

Preferably, the fan 120 is installed inside the cooling group 100 behind the respective main radiator body 110 in such a way as to draw air through it. In other words, the fans 120 of each cooling group 100 are substantially facing to the intermediate region 55.

According to a preferred embodiment, at least one of said cooling groups 100 comprises a secondary radiator body 115 for cooling a further component of the tractor, placed in series with the main radiator body 110. Preferably, the fan 120 is suitable to suck air through both the main radiator body 110 and through the secondary radiator body 115. As shown by way of example in the accompanying figures, the secondary radiator body 115 is of smaller dimensions than the main radiator body 110.

In a preferred embodiment, the fan 120 is also equipped with a conveyor 125 suitable to facilitate the flow of air through the main radiator body 110 and in particular across the cooling surface 100' in its entirety.

Preferably, the fan 120 is of the hydraulic control type. According to this preferred embodiment, the fan 120 is driven by a drive joint 128 is substantially housed in the intermediate region 55.

In further preferred embodiments, the fan 120 is of the mechanical or electrical control type.

In further preferred embodiments, the main radiator body 110 comprises a plurality of radiator portions 111, 112 each suitable to cool a respective component of the tractor 1. In other words, the main radiator body 110 is divided into a plurality of radiator elements each of which is specifically suitable to cool a respective component or part of a component or region of the tractor 1. In other words, the main radiator body 110 is suitable to comprise a plurality of radiator portions 111, 112 in parallel (also referred to as side-by-side).

According to a preferred embodiment, the cooling group 100 also comprises a support structure 150 suitable to support each cooling group 100. In particular, the support structure 150 is suitable to support the two cooling groups in the above-described positions.

In particular, in fact, each cooling group 100 identifies a proximal side 101 and a distal side 102 that respectively engage the support structure 150. As shown by way of example in the figures, the support structure 150 has a shape such as to allow the engagement of the respective cooling group to it either proximally or distally. Preferably, the engagement of the respective cooling group 100 to the support structure 150 is such as to prevent unwanted vibrations.

According to a preferred embodiment, each cooling group 100 is hinged to the support structure 150 and is rotatable between an operating position and a maintenance position in which the intermediate region 55 is accessible. Preferably, the cooling group 100 is hinged to the structure at its proximal side 101.

In other words, in the operating configuration, the cooling groups 100 are engaged to the support structure 150 and are located in the spatial positions described above, for example, inclined with respect to the centreline plane M, while in the maintenance configuration of the cooling groups 100, they are instead rotated with respect to the support structure 150 in a manner such as to allow easy access to the intermediate region 55, for example to allow maintenance of the components present in said intermediate region 55, such as the fans 120, or the respective drive joints 128 (of the embodiment with hydraulically driven fan), or the power shaft 65, described below, or further components.

Preferably, therefore, each cooling group 100 is suitable to rotate, hinged to the support structure 150, around its proximal side 101 to open up by a predefined maintenance angle γ comprised between 10° and 45°, preferably 30°.

According to the invention, the tractor 1 further comprises a power take-off 60, frontally accessible by a user, for example for moving special accessories of the tractor.

According to the invention, the power take-off 60 is operatively connected to the motor 6 by a power shaft 65. The power shaft 65 extends in length along the longitudinal axis X-X housing in the intermediate region 55. Preferably, the power take-off 60 is located in the tip of the tractor 1, in the point most distal from the driving area 2, distally also with respect to the front axle of the tractor 1.

In a preferred embodiment, the bonnet 5 is provided with at least one front ventilation grille 51 through which air flows. Preferably, the front grille 51 extends facing the respective cooling groups 100, i.e., both frontally and laterally to the bonnet 5.

In further preferred embodiments, the air passing through the cooling group 100 is evacuated upward from the tractor 1, in other words upward to the intermediate region 55. Preferably, the bonnet 5 is also equipped with a central ventilation grille 521 above the intermediate zone 55 to permit said passage of air.

In still further preferred embodiments, the air passing through the cooling group 100 is also evacuated longitudinally from the tractor 1, i.e., in a region comprised between the cooling system and the driving area 2. Preferably, the bonnet 5 comprises, on both sides, at least one longitudinal ventilation grille 522 located laterally to the tractor 1 to permit said passage of air.

Innovatively, the tractor of this invention allows achieving the intended purpose of the invention, i.e., to provide effective cooling of the components and regions of the tractor by means of a cooling system of compact size.

Advantageously, the tractor has two cooling groups having mutually independent behaviours, in other words suitable to cool independent components, or parts of components, or regions of the tractor. Advantageously, moreover, the cooling groups themselves comprise inside them independent radiator portions, i.e., able to cool independent components, or parts of components, or regions of the tractor. Therefore, depending on the different needs of the tractor, the cooling system cools the cooling liquid required for cooling the motor group or of its specific portions, for example the cylinder banks, for the air conditioning system of the tractor, or for cooling the transmission of the tractor, or for the cooling the fuel cooling system.

Moreover, advantageously, the cooling system of this invention offers a cooling surface crossable by fresh air of dimensions between 30% and 50% greater than the cooling surface areas offered by known solutions housed in the same area of a tractor.

A further advantage consists in the fact that the fans are suitable to draw air through the various cooling bodies comprised in each cooling group. Advantageously, the two fans are drivable independently of each other on the tractor user's command. Advantageously, the fans are controllable independently of each other as a function of the boundary conditions in which the tractor is working, for example as a function of the outside temperature, and thus as a function of air temperature, or driving speed of the tractor, or the need for cooling of the driver's cabin.

A further advantageous aspect is linked to the fact that, independently of each other, the two fans are controllable in rotation in the direction opposite the air intake direction; in other words, each fan is commandable to clean the respective cooling group, in which the air is pushed outwards. Advantageously, this reversal of rotation of the fans is also controllable even when the tractor is in motion.

A still further advantageous aspect lies in the fact that the fans, in a preferred embodiment, are provided with hydraulic drive and house the respective drive joints in the intermediate region.

Advantageously, the tractor has an improved evacuation of hot air from the motor bonnet. In fact, advantageously, the tractor is able to evacuate the hot air both above and longitudinally avoiding that the hot air is further sucked by the fans through the radiators, lowering their operating efficiency.

Advantageously, moreover, the two cooling groups are arranged in an inclined manner so as to present at least a portion of the respective main radiator body orthogonal to the direction of travel, thus favouring the flow of fresh air through them.

Moreover, advantageously, the arrangement of the cooling groups, and specifically of the respective main radiator bodies, allows obtaining a tapered shape of the tip of the bonnet of the tractor, in such a way that the tractor driver has a wider front view.

A further advantageous aspect related to the arrangement of the cooling groups is also that of allowing the achievement of a tapered shape of the bonnet in its lower distal portion, in such a way as to allow ample angles of rotation of the wheels of the front axle.

According to the invention, the two cooling groups are spaced apart transversely, thus identifying an intermediate region in which further components of the tractor are houseable and in which the evacuation of the hot air sucked by the fans is allowed.

According to the invention, the power shaft extends in said intermediate region, which allows the connection between the front power take-off of the tractor and the motor group through a kinematic mechanism that is not complex; advantageously, then the power shaft extends through the cooling system without the need for returns to extend below the cooling system as is the case in the tractor solutions of the known art. Advantageously, the tractor of this invention has a greater useful height from the ground with respect to tractors with known front power take-off.

Advantageously, moreover, the cooling system is configurable in a maintenance configuration thanks to the rotation of the cooling groups, respectively hinged to the support structure. Advantageously, therefore, also the intermediate region, delimited by the two cooling groups, is easily accessible. Advantageously, the operations, usually daily, of maintenance and cleaning of the cooling system and in particular of the cooling groups and fans comprised in them, carried out for example by blowing compressed air or by means of a jet of water sprayed by means of a pressure washer, are particularly easy for the operator.

A further advantageous aspect lies in the fact that the aforesaid characteristics and advantages are found with extraordinary effects especially in the embodiment of the tractor as agricultural tractor.

It is clear that one skilled in the art, in order to meet contingent needs, may make changes to the tractor, bonnet and bonnet movement means described above, all contained within the scope of protection defined by the following claims.

## Claims

1. Tractor (1), having a longitudinal axis (X-X) lying on a centreline plane (M) and a transverse axis (Y-Y) perpendicular to it, comprising a driving area (2) for the user, and an operating region (50) that extends along said longitudinal axis (X-X) frontally to the driving area (2), wherein, in the operating region (50), the tractor (1) comprises a motor group (6) placed along the longitudinal axis (X-X) proximal to the driving area (2), and a cooling system (10) placed along the longitudinal axis (X-X) distally from the driving area (2), wherein said cooling system (10) comprises two cooling groups (100) independent and transversely distanced from each other identifying an intermediate region (55), wherein each cooling group (100) comprises a main radiator body (110) having a cooling surface (110') crossable by the air tangent to an imaginary plane (I), wherein said imaginary plane (I) is inclined longitudinally by a predefined angle of longitudinal inclination (α) with respect to the centreline plane (M);
**characterised in that** the tractor (1) comprises a power take-off (60) accessible frontally to the tractor (1) by a user and operatively connected to the motor group (6) by a power shaft (65), wherein the power shaft (65) extends in length along the longitudinal axis (X-X) being housed in the intermediate region (55).

2. Tractor (1) according to claim 1, wherein said angle of longitudinal inclination (α) is between 5° and 30°, preferably 10°.

3. Tractor (1) according to any of the preceding claims, further having a vertical axis V-V, wherein said imaginary plane (I) is inclined vertically at the centreline plane (M) by a predefined angle of vertical inclination (β).

4. Tractor (1) according to claim 3, wherein said angle of vertical inclination (β) is between 5° and 30°, preferably 5°.

5. Tractor (1) according to any of the preceding claims, wherein each cooling group (100) comprises, in addition to the main radiator body (110), a fan (120) having a rotation axis (R-R) incident, preferably perpendicular, to the cooling surface (110').

6. Tractor (1) according to claim 5, wherein the fan (120) is installed inside the cooling group (100) behind the respective main radiator body (110) in such a way as to draw air through it.

7. Tractor (1) according to any of claims 5 and 6, wherein said fan (120) is hydraulically actuated.

8. Tractor (1) according to any of claims 5 to 7, wherein at least one of said cooling groups (100) comprises a secondary radiator body (115) for cooling a further component of the tractor, placed in series with the main radiator body (110).

9. Tractor (1) according to any of the preceding claims, wherein at least one main radiator body (110) comprises a plurality of radiator portions (111, 112) each suitable to cool a respective component of the tractor (1).

10. Tractor (1) according to any of the preceding claims, wherein the cooling group (100) also comprises a support structure (150) suitable to support each cooling group (100) .

11. Tractor (1) according to claim 10, wherein each cooling group (100) identifies a proximal side (101) and a distal side (102) that respectively engage the support structure (150), wherein each cooling group (100) is hinged to the support structure (150), preferably at its proximal side (101), and is rotatable between an operating position and a maintenance position in which the intermediate region (55) is accessible.

12. Tractor (1) according to claim 11, wherein each cooling group (100) is suitable to rotate, hinged to the support structure (150), around its proximal side (101) to open up by a predefined maintenance angle (γ) comprised between 10° and 45°, preferably 30°.

## Patentansprüche

1. Traktor (1) mit einer Längsachse (X-X), die auf einer Mittellinienebene (M) liegt, und einer Querachse (Y-Y), die senkrecht dazu ist, umfassend einen Fahrbereich (2) für den Benutzer und einem Bedienbereich (50), der sich entlang der Längsachse (X-X) frontal zu dem Fahrbereich (2) erstreckt, wobei der Traktor (1) in dem Bedienbereich (50) eine Motorgruppe (6), die entlang der Längsachse (X-X) proximal zu dem Fahrbereich (2) platziert ist, und ein Kühlsystem (10) umfasst, das entlang der Längsachse (X-X) distal von dem Fahrbereich (2) angeordnet ist, wobei das Kühlsystem (10) zwei unabhängige und quer voneinander beabstandete Kühlgruppen (100) umfasst, die einen Zwischenbereich (55) identifizieren, wobei jede Kühlgruppe (100) einen Hauptkühlerkörper (110) mit einer Kühlfläche bzw. -oberfläche (110') umfasst, die von Luft tangential zu einer imaginären Ebene (I) überquerbar ist, wobei die imaginäre Ebene (I) längs um einen vordefinierten Längsneigungswinkel (α) mit Bezug auf die Mittellinienebene (M) geneigt ist;
**dadurch gekennzeichnet, dass** der Traktor (1) eine Zapfwelle (60) umfasst, die frontal an dem Traktor (1) für einen Benutzer zugänglich ist und durch eine Antriebswelle (65) mit der Motorgruppe (6) operativ verbunden ist, wobei sich die Antriebswelle (65) in der Länge entlang der Längsachse (X-X) erstreckt und in dem Zwischenbereich (55) untergebracht ist.

2. Traktor (1) nach Anspruch 1, wobei der Längsneigungswinkel (α) zwischen 5° und 30°, vorzugsweise 10°, beträgt.

3. Traktor (1) nach einem der vorhergehenden Ansprüche, ferner aufweisend eine vertikale Achse (V-V), wobei die imaginäre Ebene (I) vertikal an der Mittellinienebene (M) um einen vordefinierten Vertikalneigungswinkel (β) geneigt ist.

4. Traktor (1) nach Anspruch 3, wobei der Vertikalneigungswinkel (β) zwischen 5° und 30°, vorzugsweise 5°, beträgt.

5. Traktor (1) nach einem der vorhergehenden Ansprüche, wobei jede Kühlgruppe (100) zusätzlich zu dem Hauptkühlerkörper (110) ein Gebläse bzw. einen Lüfter (120) mit einer Drehachse (R-R) umfasst, die vorzugsweise senkrecht zu der Kühlfläche (110') ist.

6. Traktor (1) nach Anspruch 5, wobei der Lüfter (120) im Inneren der Kühlgruppe (100) hinter dem jeweiligen Hauptkühlerkörper (110) derart installiert ist, dass er Luft durch sich bzw. diesen zieht.

7. Traktor (1) nach einem der Ansprüche 5 und 6, wobei der Lüfter (120) hydraulisch betätigt wird.

8. Traktor (1) nach einem der Ansprüche 5 bis 7, wobei zumindest eine der Kühlgruppen (100) einen sekundären Kühlerkörper (115) zum Kühlen einer weiteren Komponente des Traktors umfasst, der in Reihe mit dem Hauptkühlerkörper (110) platziert ist.

9. Traktor (1) nach einem der vorhergehenden Ansprüche, wobei zumindest ein Hauptkühlerkörper (110) eine Mehrzahl von Kühlerabschnitten (111, 112) umfasst, die jeweils geeignet sind, eine jeweilige Komponente des Traktors (1) zu kühlen.

10. Traktor (1) nach einem der vorhergehenden Ansprüche, wobei die Kühlgruppe (100) zudem eine Stütz- bzw. Trägerstruktur (150) umfasst, die geeignet ist, jede Kühlgruppe (100) zu stützen bzw. zu tragen.

11. Traktor (1) nach Anspruch 10, wobei jede Kühlgruppe (100) eine proximale Seite (101) und eine distale Seite (102) identifiziert, die jeweils in die Trägerstruktur (150) eingreifen, wobei jede Kühlgruppe (100) an der Trägerstruktur (150) angelenkt ist, und zwar vorzugsweise an ihrer proximalen Seite (101), und zwischen einer Betriebsposition und einer Wartungsposition drehbar ist, in der der Zwischenbereich (55) zugänglich ist.

12. Traktor (1) nach Anspruch 11, wobei jede Kühlgruppe (100) geeignet ist, sich angelenkt an der Trägerstruktur (150) um ihre proximale Seite (101) zu drehen, um sich um einen vordefinierten Wartungswinkel (γ) zu öffnen, der zwischen 10° und 45°, vorzugsweise 30° liegt.

## Revendications

1. Tracteur (1), ayant un axe longitudinal (X-X) se trouvant sur un plan médian (M) et un axe transversal (Y-Y) perpendiculaire à celui-ci, comprenant une zone de conduite (2) destinée à l'utilisateur, et une région de fonctionnement (50) qui s'étend le long dudit axe longitudinal (X-X) frontalement par rapport à la zone de conduite (2), dans lequel, dans la région de fonctionnement (50), le tracteur (1) comprend un groupe moteur (6) placé le long de l'axe longitudinal (X-X) de manière proximale par rapport à la zone de conduite (2), et un système de refroidissement (10) placé le long de l'axe longitudinal (X-X) de manière distale par rapport à la zone de conduite (2), dans lequel ledit système de refroidissement (10) comprend deux groupes de refroidissement (100) indépendants et espacés transversalement l'un de l'autre identifiant une région intermédiaire (55), dans lequel chaque groupe de refroidissement (100) comprend un corps de radiateur principal (110) ayant une surface de refroidissement (110') qui peut être traversée par de l'air de manière tangentielle par rapport à un plan imaginaire (1), dans lequel ledit plan imaginaire (1) est incliné longitudinalement selon un angle d'inclinaison longitudinale (α) prédéfini par rapport au plan médian (M) ;
**caractérisé en ce que** le tracteur (1) comprend une prise de force (60) accessible frontalement par rapport au tracteur (1) par un utilisateur et reliée de manière fonctionnelle au groupe moteur (6) par un arbre de commande (65), dans lequel l'arbre de commande (65) s'étend en longueur le long de l'axe longitudinal (X-X) logé dans la région intermédiaire (55).

2. Tracteur (1) selon la revendication 1, dans lequel ledit angle d'inclinaison longitudinale (α) est compris entre 5° et 30°, de préférence 10°.

3. Tracteur (1) selon l'une quelconque des revendications précédentes, ayant en outre un axe vertical (V-V), dans lequel ledit plan imaginaire (I) est incliné verticalement au plan médian (M) selon un angle d'inclinaison verticale (β) prédéfini.

4. Tracteur (1) selon la revendication 3, dans lequel ledit angle d'inclinaison verticale (β) est compris entre 5° et 30°, de préférence 5°.

5. Tracteur (1) selon l'une quelconque des revendications précédentes, dans lequel chaque groupe de refroidissement (100) comprend, en plus du corps de radiateur principal (110), un ventilateur (120) ayant un axe de rotation (R-R) incident, de préférence perpendiculaire, à la surface de refroidissement (110').

6. Tracteur (1) selon la revendication 5, dans lequel le ventilateur (120) est installé à l'intérieur du groupe de refroidissement (100) derrière le corps de radiateur principal (110) respectif de manière à aspirer de l'air à travers celui-ci.

7. Tracteur (1) selon l'une quelconque des revendications 5 et 6, dans lequel ledit ventilateur (120) est actionné hydrauliquement.

8. Tracteur (1) selon l'une quelconque des revendications 5 à 7, dans lequel au moins l'un desdits groupes de refroidissement (100) comprend un corps de radiateur secondaire (115) pour refroidir un composant supplémentaire du tracteur, placé en série avec le corps de radiateur principal (110).

9. Tracteur (1) selon l'une quelconque des revendications précédentes, dans lequel au moins un corps de radiateur principal (110) comprend une pluralité de parties radiateurs (111, 112), chacune étant appropriée pour refroidir un composant respectif du tracteur (1).

10. Tracteur (1) selon l'une quelconque des revendications précédentes, dans lequel le groupe de refroidissement (100) comprend également une structure de support (150) appropriée pour supporter chaque groupe de refroidissement (100).

11. Tracteur (1) selon la revendication 10, dans lequel chaque groupe de refroidissement (100) identifie un côté proximal (101) et un côté distal (102) qui mettent respectivement en prise la structure de support (150), dans lequel chaque groupe de refroidissement (100) est articulé à la structure de support (150), de préférence au niveau de son côté proximal (101), et peut tourner entre une position de fonctionnement et une position d'entretien dans laquelle la région intermédiaire (55) est accessible.

12. Tracteur (1) selon la revendication 11, dans lequel chaque groupe de refroidissement (100) est approprié pour tourner, articulé à la structure de support (150), autour de son côté proximal (101) pour s'ouvrir selon un angle d'entretien (γ) prédéfini compris entre 10° et 45°, de préférence 30°.
